Europäisches Patentamt

European Patent Office

Office européen des brevets

(11) Veröffentlichungsnummer: **0 254 826**
**A2**

## (12) EUROPÄISCHE PATENTANMELDUNG

(21) Anmeldenummer: 87106744.3

(22) Anmeldetag: 08.05.87

(51) Int. Cl.⁴: **B01F 15/00**

(30) Priorität: 01.07.86 DE 3622027

(43) Veröffentlichungstag der Anmeldung:
**03.02.88 Patentblatt 88/05**

(84) Benannte Vertragsstaaten:
**BE CH DE FR GB IT LI NL**

(71) Anmelder: **HÜLS AKTIENGESELLSCHAFT**
**- RSP Patente / PB 15 - Postfach 13 20**
**D-4370 Marl 1(DE)**

(72) Erfinder: **Bollenrath, Franz-Michael, Dr.**
**Lipper Weg 197**
**D-4370 Marl(DE)**

(54) **Dichtungssystem für Rührer mit Untenantrieb.**

(57) Die Erfindung betrifft ein Dichtungssystem für Rührer eines Rührkessels mit Untenantrieb sowie ein Verfahren zum Rühren in derartigen Rührkesseln.
Das Dichtungssystem besteht aus
-einer Antriebswelle **1**,
- einem Rohr **3**, das die Rührerwelle mit einem Spalt umschließt,
-einem rotationssymmetrischen Körper **2**, der nach oben hin geschlossen ist und fest und dicht mit der Rührerwelle verbunden ist und
-einer gasundurchlässigen Dichtung **6**.

EP 0 254 826 A2

## Dichtungssystem für Rührer mit Untenantrieb

Rührer mit Untenantrieb weisen eine Reihe von Vorteilen auf (vgl. Beck CAV 1973 (4), S. 55). Nicht zuletzt sind die Reinigungsprobleme zu erwähnen, die im Vergleich zu einer langen von oben kommenden Rührerwelle vermieden werden können.

W. Sittig beschreibt in Chemtech. 1983, S. 606 ff. einen Fermentationsloopreaktor (vgl. Figur 4), bei dem die Begasung des Rührmediums mit Hilfe eines Tauchrohres und eines von unten angetriebenen Rührers vorgesehen ist. Auch hier erfolgt die Abdichtung der Rührerwelle mit einer einfachen Stoffbuchse. Dies führt zwangsläufig zu Problemen bei der Sterilisierung.

Probleme bei diesem Antrieb bereitet generell die Abdichtung der Rührerwelle. Üblicherweise verwendet man zu diesem Zweck eine Gleitringdichtung oder eine Stopfbuchse, die entweder unmittelbar unter dem Rührkesselboden oder in einer gewissen Distanz davon entfernt angebracht ist. Diese Probleme sind besonders ausgeprägt bei Verfahrensschritten, bei denen es zu Polymerisationen, Anbackungen, Absetzvorgängen und dgl. kommt. Schwierigkeiten treten auch bei Rührvorgängen, bei denen strenge Sterilität gefordert ist, auf.

Diese Probleme sind im wesentlichen darauf zurückzuführen, daß zwischen der Kesselwandung und der Halterung bis zur Gleitringdichtung ein Spalt frei bleibt, der sich mit dem Rührmedium füllt.

Man kann durch diesen Spalt eine Spülflüssigkeit zu leiten, um das Eindringen des Reaktionsmediums zu vermeiden (vgl. Beck CAV 1973 (4), S. 55). Dies erfordert jedoch, wie die Praxis zeigt, ganz erhebliche Flüssigkeitsmengen, die vielfach nicht toleriert werden können.

Herrscht im Reaktor eine hohe Temperatur oder ist die Rührerwelle infolge Belastung überhitzt, so wird die Haltbarkeit der Dichtung besonders hohen Anforderungen unterworfen. In problematischen Fällen ist eine zusätzliche Kühlung erforderlich.

Als konkretes Beispiel für die auftretenden Probleme mag die Rührung eines zu polymerisierenden Kautschuklatex dienen. In diesem Fall beobachtet man, daß sich der Latex zwischen Rührkessel und Rührerwelle absetzt, unter Umständen in die Dichtung eindringt, im Spalt und in der Dichtung zusammenbackt, sich dort erhitzt und binnen kürzester Zeit die Welle blockiert und auch die gesamte Dichtung zerstört. Es ist daher notwendig, die Dichtungen ständig zu überprüfen und häufig zu wechseln. Der Ersatz der Dichtungen ist jedoch arbeitsaufwendig, zeitintensiv und daher überaus kostspielig. Eine Spülung des Spaltes mit einer inerten Flüssigkeit scheidet in diesem Falle aus, da dadurch die Konzentration der Polymerlösung in unzulässiger Weise verändert würde.

Nach dem heutigen Stand der Technik gibt es kein Dichtungssystem, das in solchen Fällen grundsätzlich Abhilfe schaffen könnte.

Aufgabe der Erfindung ist es, ein Dichtungssystem bereitzustellen, das zuverlässig und dauerhaft einsetzbar ist.

Es wurde jetzt gefunden, daß alle diese Probleme, die durch das Eindringen von Rührmedium in den Spalt zwischen Rührwelle, Rührkesselwand und Dichtung entstehen, gelöst werden können, wenn man ein Dichtungssystem verwendet, wie es in den Ansprüchen 1 bis 8 beschrieben ist.

Gegenstand der Erfindung sind ferner die Verfahren entsprechend den Ansprüchen 9 bis 13.

Mit der Erfindung werden folgende Vorteile erzielt:

-Eine Spülung der Rührerwelle ist nicht mehr erforderlich.
-Das Absetzen von festem Material zwischen Rührerwelle und Rührkessel wird wirkungsvoll verhindert.
-Es ist nunmehr möglich, unter sterilen Bedingungen zu rühren.
-Auch vergleichsweise billige Dichtungen, die gegenüber Lösemitteln und anderen chemischen Reagentien wenig beständig sind, können eingesetzt werden.
-Die Dichtungen sind länger haltbar.
-Ein Austausch der Dichtungen ist auch bei gefülltem Kessel möglich, wenn man zusätzlich eine Standabdichtung vorsieht (vgl. Schrift der Firma Ekato Rühr-und Mischtechnik GmbH, D-7860 Schopfheim, Postfach 11 10/20 "Wirtschaftliche Unterniveau-Rührwerke", Autoren Schupper und Beck).

Der Rührkessel 4 kann im Prinzip ein Behälter beliebiger Form sein, vorzugsweise verwendet man jedoch einen stehenden, zylinderförmigen Behälter. Er ist mit einem Rührer mit Untenantrieb ausgestattet (vgl. Abbildung).

Man kann Antriebswellen und Rührer beliebiger technischer Bauart verwenden; beispielsweise handelt es sich um einen Impellerrührer mit kurzer Welle (Verhaltnis Rührerdurchmesser d zu Rührkesseldurchmesser D gleich 0,4).

Die Dichtung 6 muß gasundurchlässig sein. Üblicherweise handelt es sich um eine Stopfbuchse oder eine Gleitringdichtung. Derartige Dichtungen werden beispielsweise in R. H. Perry, C. H. Chilton Chemical Engenneers' Handbook, 5th. Ed. Mc Graw Hill, New York, Seite 6 bis 29 und 6 bis 35 sowie in E. Seifert, Verfahrenstechnik 3, Seite 501 ff. (1969) beschrieben.

Das Rohrstück 3 ist mit dem Rührkesselboden fest und dicht verbunden. Es kann zweckmäßig sein, die Verbindung zwischen Rohr 3 und Rührkesselboden so zu gestalten, daß man das Rohr relativ leicht entfernen und wieder einfügen kann. Im Sinne der Erfindung ist es erforderlich, daß das Rohr am Rührkesselboden beginnt und in den Rührkessel hineingeführt ist. Für das Anbringen der Dichtung ist es vorteilhaft, wenn das Rohr nach unten hin verlängert ist, d. h. durch den Rührkesselboden durchgeführt ist. Der Innendurchmesser des Rohres muß größer als der Außendurchmesser der Rührerwelle sein. Vorzugsweise weist der Spalt zwischen beiden Teilen eine Weite von 0,01 mm bis 10 cm auf.

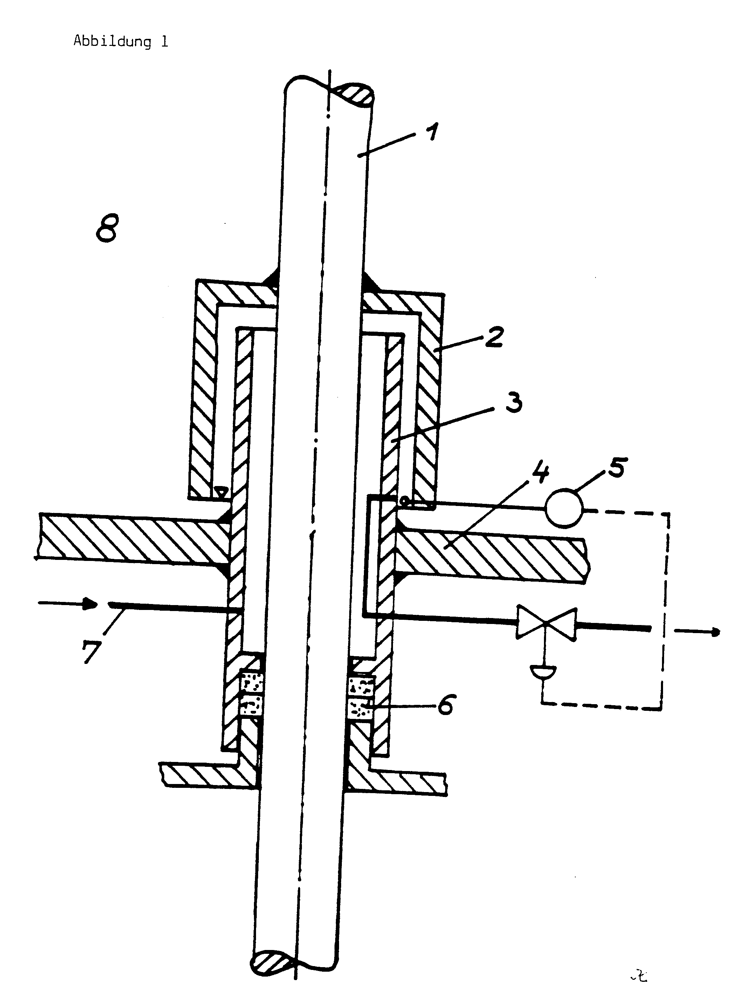

Der Körper 2 hat eine rotationssymmetrische Form und ist mit der Rührwelle fest und dicht verbunden. Wesentlich ist, daß dieser Körper nach oben hin geschlossen und nach unten offen sein muß. Die Wände dieses Körpers müssen soweit von dem Rohr entfernt sein, daß sich zwischen beiden ein Spalt bildet. Hat der rotationssymmetrische Körper die Form eines nach oben hin geschlossenen Zylinders, wie dies in Abbildung 1 dargestellt ist, so hat dieser Spalt vorzugsweise eine Weite von 0,1 mm bis 10 cm.

Eine andere besonders zweckmäßige Form von 2 ist die eines Kegels oder Kegelstumpfes. In diesem Fall ist es vorteilhaft, wenn der Kegel nach oben hin in einen Zylinder übergeht, der nach oben hin abgeschlossen sein muß.

Rührerwelle 1, Rohr 3 und rotationssymmetrischer Körper 2 sind üblicherweise koaxial angeordnet.

Es ist sinnvoll, das Dichtungssystem mit einem Einleitungssystem 7 und gegebenenfalls einem Regelsystem 5 für ein Fluid zu versehen, das dazu dient, im Betrieb ein Fluidpolster zwischen Dichtung 6 und Rührmedium 8 aufrecht zu erhalten.

Als Fluid sind im Rahmen dieser Erfindung Gase und Flüssigkeiten anzusehen. Im allgemeinen wird es sich um ein Material handeln, das gegenüber dem Rührmedium 8 inert ist. Es sind jedoch auch Fluide geeignet, die mit dem Rührmedium 8 reagieren können, sofern gewährleistet ist, daß es im Bereich der Rührwelle oberhalb der Dichtung 6 nicht zu Ablagerungen kommt.

Geeignete Flüssigkeiten sind vielfach spezifisch leichter als das Rührmedium 8 . Beispielsweise eignen sich Weißöle, wenn es sich um Rührmedien handelt, die mindestens die Dichte von Wasser aufweisen.

Bevorzugte Fluide sind inerte Gase wie z. B. Stickstoff und die Edelgase. In anderen Fällen kann es praktisch sein, Gase einzusetzen, die mit dem Rührmedium reagieren, z. B. Sauerstoff bei Oxidationen, Wasserstoff bei Reduktionen etc. Die beschriebene Vorrichtung dient dann zweckmäßigerweise als Zufuhrstelle für die gasförmige Komponente.

Im Prinzip ist eine Durchführung des erfindungsgemäßen Verfahrens auch ohne Einleitung eines Fluids möglich. Da es aber bereits beim Füllen des Rührkessels infolge Zunahme des Druckes am Rührkesselboden dazu kommen kann, daß das vorhandene Luftpolster zusammengedrückt wird und auch während des Betriebs Verluste des Fluids auftreten können, wird es im allgemeinen erforderlich sein, mindestens soviel Fluid zu ergänzen, daß die Grenzfläche zwischen Fluid/Rührmedium zwischen der Unterkante des rotationssymmetrischen Körpers 2 und der Oberkante des Rohres 3 liegt. Es gibt verschiedene Möglichkeiten, um dies zu erreichen. Zwei Ausführungsformen sollen im folgenden beschrieben werden:

Eine besonders einfache Auführung besteht darin, über das Einleitungssystem 7 einen konstanten Gasstrom zuzuführen, der ins Rührmedium austritt.

Man kann aber auch zusätzlich ein Regelungssystem 5 mit einer Standregelung vorsehen, wie dies in Abbildung 1 angedeutet ist. Sobald das Fluid ein bestimmtes Niveau im Spalt zwischen 2 und 3 unterschritten hat, wird das überschüssige Fluid über ein Ventil abgelassen.

Beispiel 1

Ein Styrol-Butadien-Latex wird in einem Rührkessel mit Batch-Fahrweise hergestellt. Das Volumen des Versuchsreaktors beträgt 20 m$^3$, die Reaktionszeit 8 Stunden. Der Rührkessel ist mit einem Untenantrieb und der erfindungsgemäßen Dichtung ausgerüstet. Der rotationssysmmetrische Körper 2 hat die Form eines nach unten offenen Kegels, der nach oben hin in einen nach oben abgeschlossenen Zylinder übergeht. Das Dichtungssystem ist mit einem Einleitungssystem 7 ausgestattet. Während der gesamten Reaktion werden insgesamt 0,01 Nm$^3$ Stickstoff durch das Einleitungssystem 7 in den Dichtungshohlraum geleitet. Nach Abschluß der Reaktion ist eine Reinigung des Dichtungssystems nicht erforderlich. Die Kesselreinigung erfolgt in den üblichen Abständen.

Vergleichsbeispiel A

In einem Reaktor gleicher Form und Größe wie er in Beispiel 1 beschrieben ist, der mit Untenantrieb und mit Gleitringdichtung ausgerüstet ist, wird in analoger Weise ein Styrol-Butadien-Latex hergestellt. Der Spalt zwischen Rührkessel und Rührerwelle füllt sich während der Reaktion mit sich verfestigendem Latex. Das Drehmoment an der Rührerwelle wird so groß, daß die Reaktion abgebrochen werden muß.

Vergleichsbeispiel B

Analog zu Vergleichsbeispiel A wird in einem Reaktor, der mit Untenantrieb und Gleitringdichtung ausgerüstet ist, ein Styrol-Butadien-Latex hergestellt. Zur Vermeidung der in Vergleichsbeispiel A beschriebenen Schwierigkeiten wird der Zwischenraum zwischen Antriebswelle und Rührkessel während der Reaktion mit Wasser gespült.
Die erhaltene Latexsuspension weist - verursacht durch die nunmehr veränderten Konzentrationsverhältnisse - nicht mehr die gewünschten Spezifikationen auf; der mittlere Korndurchmesser und die Kornverteilung sind verändert.
Die Menge des mit Butadien beladenen Abwassers steigt um 10 % an.

**Ansprüche**

1. Dichtungssystem für Rührer eines Rührkessels 4 mit Untenantrieb, bestehend aus einer Antriebswelle 1, einer gasundurchlässigen Dichtung 6 und gegebenenfalls einem Distanzrohr, dadurch gekennzeichnet, daß

1. auf dem Rührkesselboden ein Rohr 3 aufgesetzt ist, das die Rührerwelle 1 mit einem Spalt umschließt und das fest und dicht mit dem Rührkesselboden verbunden ist,

2. die Rührerwelle 1 mit einem rotationssymmetrischen Körper 2 ausgestattet ist,
-der nach oben hin geschlossen ist und fest und dicht mit der Rührerwelle 1 verbunden ist,
-dessen Innendurchmesser größer als der Außendurchmesser des Rohres 3 ist und
-der nach unten offen ist, wobei die Unterkante des rotationssymmetrischen Körpers 2 unterhalb der Oberkante des Rohres 3 liegt.

2. Dichtungssystem nach Anspruch 1, dadurch gekennzeichnet, daß es mit einem Einleitungssystem 7 und ggf. einem Regelsystem 5 für ein Fluid ausgestattetist, das es im Betrieb ermöglicht, ein Fluidpolster zwischen Dichtung 6 und Rührmedium 8 aufrechtzuerhalten.

3. Dichtungssystem nach Anspruch 1 oder 2, dadurch gekennzeichnet, daß das Rohr 3 durch den Rührkesselboden durchgeführt ist und an seinem unteren Ende die gasundurchlässige Dichtung 6 angebracht ist.

4. Dichtungssystem nach den Ansprüchen 1 bis 3, dadurch gekennzeichnet, daß der Spalt zwischen Rohr 3 und Rührerwelle 1 eine Weite von 0,01 mm bis 10 cm aufweist.

5. Dichtungssystem nach den Ansprüchen 1 bis 4, dadurch gekennzeichnet, daß der rotationssymmetrische Körper 2 die Form eines Zylinders aufweist.

6. Dichtungssystem nach Anspruch 5, dadurch gekennzeichnet, daß der Abstand zwischen der Außenwand des Rohres 3 und der Innenwand des Zylinders 0,1 mm bis 10 cm beträgt.

7. Dichtungssystem nach den Ansprüchen 1 bis 4, dadurch gekennzeichnet, daß der rotationssymmetrische Körper 2 die Form eines nach unten offenen Kegels aufweist.

8. Dichtungssystem nach Anspruch 7, dadurch gekennzeichnet, daß der Kegel nach oben hin in einen Zylinder übergeht, der nach oben abgeschlossen ist.

9. Verfahren zum Rühren in Rührkesseln mit Untenantrieb, dadurch gekennzeichnet, daß man ein Dichtungssystem gemäß Ansprüchen 1 bis 8 verwendet und gegebenenfalls in den Spalt zwischen Rührerwelle 1 und Rohr 3 ein Fluid leitet, so daß zwischen dem Rührmedium und der Dichtung ein Fluidpolster entsteht.

10. Verfahren gemäß Anspruch 9, dadurch gekennzeichnet, daß das Fluid ein Gas ist.

11. Verfahren gemäß Anspruch 10, dadurch gekennzeichnet, daß man ein Gas verwendet, das als Reaktionspartner dient.

12. Verfahren gemäß den Ansprüchen 9 bis 11, dadurch gekennzeichnet, daß man einen konstanten Gasstrom durch den Hohlraum des Dichtungs-systems leitet, der - schließlich in das Rührmedium eintritt.

13. Verfahren gemäß den Ansprüchen 9 bis 11, dadurch gekennzeichnet, daß man nur soviel Gas einleitet, daß der Flüssigkeitsstand zwischen der Unterkante des rotationssymmetrischen Körpers 2 und der Oberkante des Rohres 3 gehalten wird.

Abbildung 1